# EUROPEAN PATENT APPLICATION

(11) **EP 2 495 279 A1**
(43) Date of publication of application: **05.09.2012**
(21) Application number: 12169801.3
(22) Date of filing: 26.06.2008
(51) Int. Cl.: C08L 23/10, C08L 53/02

(54) **Thermoplastic polyolefin compositions having improved melt viscosity and methods of making the same**

(30) Priority: 27.06.2007 US 769448
(62) Divisional of application: 08772065.2
(71) Applicant: Inteva Products, Troy, MI 48084 (US)
(72) Inventor: Kakarala, Srimannarayana, Bloomfield Hills, MI Michigan 48302 (US); Ellis, Thomas, S., Romeo, MI Michigan 48065 (US); Bankston, Ralph, Grabd Blanc, MI Michigan 48439 (US)
(74) Representative: TBK

(57) **Abstract**

Disclosed is a thermoplastic polyolefin composition having a reduced melt viscosity, (a) polypropylene, (b) a hydrogenated copolymer of a vinyl aromatic compound and an alkylene compound, comprising (i) from 1 to no more than 30 % by weight of vinyl aromatic residues, based on the weight of the copolymer, and (ii) at least 60 % by weight of alkylene residues that are C4 or higher, based on the weight of the copolymer, and a processing oil (f).

## Description

### Technical Field

The present invention relates generally to thermoplastic polyolefin compositions having reduced melt viscosities at a given temperature and more specifically to thermoplastic polyolefin compositions for rotational molding requiring lower processing temperatures.

### Background of the Invention

Thermoplastic polyolefin compositions are actively pursued as alternative materials for fabricated articles made of polyvinyl chloride, thermoplastic polyurethane, and/or recycled polymers. In the automotive field, thermoplastic polyolefin compositions have been used for the fabrication of articles such as interior sheathing, including instrument panel skins, door panels, air bag covers and seat covers. Many of these articles have surface appearances and designs with complex surface characteristics, such as contours and geometric technical grains.

Rotational molding processes involving a rotating mold have been found to be useful in the production of a variety of molded articles. Slush molding is a type of rotational molding wherein less than the entire interior surface of the rotating mold is heated. That is, in a slush molding process, a preheated mold is in continuous contact with a reservoir holding unheated polymer powder. As the polymer powder contacts the heated mold surface, it melts and fills all aspects of the mold. The relevant portion of the mold surface must therefore be heated to a temperature sufficient to obtain a desirable melt viscosity in the polymer to be molded.

Slush molding processes have been found to be particularly advantageous for the production of molded articles with complex surface characteristics. However, the energy required to heat the large mold surfaces to the necessary temperatures is disadvantageous.

In addition, the balance of material properties desired for a slush molding process has been difficult to achieve with current thermoplastic polyolefin compositions. Typical thermoplastic polyolefin compositions are often processed for prolonged time periods at extremely high temperatures to form a fused skin in a slush molding process. The material composition of a typical thermoplastic polyolefin composition may degrade during processing which in turn may alter the material properties, such as the material strength and uniform fusion of the composition. As a result, slush molded articles produced using traditional thermoplastic polyolefm compositions may have unacceptable surface appearance and mechanical properties.

To achieve suitability for slush molding without material property degradation, thermoplastic polyolefin compositions with a very low melt viscosity during the molding process are desired. The use of such compositions in slush molding processes would result in lower overall energy expenditures. Herein we refer to melt viscosity at any given temperature as that property measured at low shear rates, such as that defined by zero shear rate viscosity. The melt viscosity of the thermoplastic polyolefin compositions for use in slush molding will generally be, but are not limited to, melt viscosities in the range of 50 Pa.s to 250 Pa.s over the processing temperature range of 180°C to 260°C as measured at low shear rate such as that applied by a parallel plate rheometer.

However, it has been difficult to obtain thermoplastic polyolefin compositions having such low melt viscosities in combination with other desirable performance properties, especially appearance and tactile properties such as 'soft touch'.

There is thus a need in the art for a thermoplastic polyolefin composition having a lower melt viscosity at a particular molding temperature for use in slush molding. There is a further need for a thermoplastic polyolefin composition having improved material properties, such as uniform melt fusion, during the slush molding process that simultaneously possess improved surface characteristics and appearance in molded articles made therefrom.

### Summary of the Invention

Disclosed is a thermoplastic polyolefin composition having reduced melt viscosities without any loss of processing advantages or final performance properties.

In one embodiment, the disclosed composition comprises a polypropylene (a), a hydrogenated copolymer (b) of a vinyl aromatic compound and an alkylene compound, the hydrogenated copolymer (b) comprising (i) from 1 to no more than 30% by weight of vinyl aromatic residues, based on the weight of the hydrogenated copolymer (b), and (ii) at least 55 % by weight of alkylene residues having four or more carbons, based on total alkylene content of the copolymer (b) prior to hydrogenation, and (f) a processing oil.

Also disclosed is a method of making a thermoplastic polyolefin composition having reduced melt viscosity. In one embodiment, the method comprises combining a polypropylene (a), a hydrogenated copolymer (b) of a vinyl aromatic compound and an alkylene compound, the copolymer (b) comprising (i) from 1 to no more than 30% by weight of vinyl aromatic residues, based on the weight of the hydrogentated copolymer (b), and (ii) at least 55 % by weight of alkylene residues that are C₄ or higher, based on total alkylene content of the copolymer (b) prior to hydrogenation, and (f) a processing oil, wherein the resulting composition of (a), (b) and (f) has a lower order/disorder transition temperature as compared to a composition consisting of (a) and (b) in the absence of (f).

In another embodiment, articles of manufacture prepared with the present compositions are provided.

These and other features and advantages will be apparent from the following brief description of the drawings, detailed description, and appended claims and drawings.

### Brief Description of the Drawings

Referring now to the drawings that are meant to be exemplary, not limiting:
Figure 1 is a schematic depiction of a process of compounding thermoplastic polyolefin composition to form a powder.
Figure 2 is a schematic depiction of a process of In-line compounding thermoplastic polyolefin compositions to form particles such as micropellets in accordance with the present invention.
Figure 3 is a graph depicting the order/disorder transition temperature shift as a function of composition.
Figure 4 is a second graph depicting the order/disorder transition temperature shift as a function of composition.

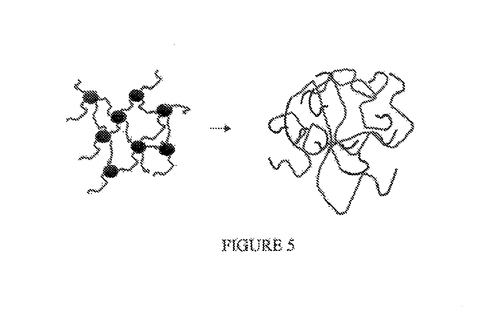

Figure 5 is a schematic illustration of the order/disorder transition shift on a molecular level+.

### Detailed Description of the Preferred Embodiment

Described herein are thermoplastic polyolefin compositions and processes for preparing the same. The present invention also relates to articles of manufacture prepared from the compositions.

In one embodiment, the thermoplastic polyolefin compositions are flexible thermoplastic polymer compositions having flex modulus values less than about 10,000 pounds per square inch (psi), preferably about 1,000 psi to about 7,000 psi, more preferably about 1,000 psi to about 3,000 psi all at 75°F / 25°C.

In one embodiment, a thermoplastic polyolefin composition having improved adhesion to applied foams or coatings is disclosed, the composition comprising a polypropylene (a), a hydrogenated vinyl aromatic alkylene copolymer (b) comprising (i) from 1 to no more than 30% by weight of vinyl aromatic residues, based on the weight of the copolymer, and (ii) from 55 to 98 % by weight of alkylene residues that are C₄ or higher, based on the weight of the total alkylene content of the copolymer (b) prior to hydrogenation, and (f) a processing oil.

In another embodiment, the disclosed polyolefin composition will further comprise from 0 to 30 weight % of an optional polymer component (e).

In yet another embodiment, the disclosed polyolefin composition will further comprise an optional functionalized polyolefin (c) and an optional monoamine terminated polyalkylene oxide.

In one embodiment, the disclosed thermoplastic polyolefin composition comprises (a) from 20 to 50 % by weight of polypropylene, (b) from 5 to 60 % by weight of the hydrogenated vinyl aromatic alkylene copolymer (b), and (f) from 1 to 10 % by weight of a processing oil.

Suitable polypropylene for use as polypropylene (a) includes, but is not limited to, crystalline polypropylene and is intended to include in addition to the homopolymer those polymers that also contain other olefm monomers, for example ethylene, butene, octene and the like. In one embodiment, such other olefin monomers may be present in minor amounts of from 5 to 15 weight %, based on the weight of the polypropylene. In one embodiment, suitable polypropylene polymers (a) have melt flow indices in the range of about 60 to about 1200 grams/10 minutes (g/10min.) measured at 230°C employing a 2.16 kilogram (kg) weight.

In one embodiment, the disclosed thermoplastic polyolefin compositions comprise about 20 wt.% to about 50 wt.% polypropylene (a) based on the total weight of all polymeric components. The term "all polymeric components" as used herein refers to components (a) and (b), and optional components (c), (d) and/or component (e). In another embodiment, the disclosed thermoplastic polyolefin compositions comprise about 20 wt% to about 40 wt% polypropylene based on the total weight of all polymeric components. In one exemplary embodiment, the disclosed thermoplastic polyolefin compositions comprise about 25 wt.% to about 35 wt.% polypropylene based on the total weight of all polymeric components.

The disclosed thermoplastic polyolefin composition further comprises a hydrogenated copolymer (b) resulting from the hydrogenation of a copolymer (b') resulting from the copolymerization of an alkenyl or vinyl aromatic compound and an alkylene compound. The copolymer (b') is characterized by having (i) from 1 to no more than 30% by weight of vinyl aromatic residues, based on the weight of copolymer (b'), and (ii) from 55 to 98 % by weight of alkylene residues that are C₄ or higher, based on total alkylene content of the copolymer (b').

The copolymer (b') may be comprised of either random or block In one exemplary embodiment, the copolymer (b') and thus hydrogenated copolymer (b) will be a random copolymer.

The alkenyl or vinyl aromatic compound is represented by formula: 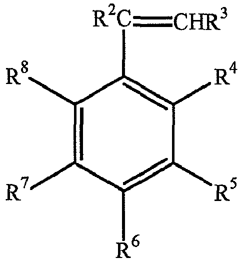 wherein R² and R³ each independently represent a hydrogen atom, a C₁-C₈ alkyl group, a C₂-C₈ alkenyl group, or the like; R⁴ and R⁸ each independently represent a hydrogen atom, a C₁-C₈ alkyl group, a chlorine atom, a bromine atom, or the like; and R⁵-R⁷ each independently represent a hydrogen atom, a C₁-C₈ alkyl group, a C₂-C₈ alkenyl group, or the like, or R⁴ and R⁵ are taken together with the central aromatic ring to form a naphthyl group, or R⁵ and R⁶ are taken together with the central aromatic ring to form a naphthyl group.

Specific examples, of the alkenyl aromatic compounds include styrene, p-methylstyrene, alpha-methylstyrene, vinylxylenes, vinyltoluenes, vinylnaphthalenes, divinylbenzenes, bromostyrenes, chlorostyrenes, and the like, and combinations comprising at least one of the foregoing alkenyl aromatic compounds. Of these, styrene, alpha-methylstyrene, p-methylstyrene, vinyltoluenes, and vinylxylenes are preferred, with styrene being more preferred.

Suitable alkylene compounds include diene and polyalkyenes. In one embodiment, the alkylene compound used in the preparation of the copolymer (b') and thus hydrogenated copolymer (b) will be a diene. Especially suitable alkylenes are those alkylenes that result in repeating units comprising alkylene groups having four or more carbons prior to any hydrogenation of the resulting copolymer. In one exemplary embodiment, the alkylene compound will be a conjugated diene. Specific examples of suitable alkylenes include 1,3-butadiene, 2-methyl-1,3-butadiene, 2,3-dimethyl-1,3-butadiene, 1,3-pentadiene, and the like. In one embodiment, the alkylene will at least one of 1,3-butadiene and 2-methyl-1,3-butadiene, with 1,3-butadiene being used in one especially exemplary embodiment.

It is an aspect of the disclosed thermoplastic polyolefin composition that the content of the repeating unit derived from the alkenyl aromatic compound in the copolymer (b') and thus hydrogenated copolymer (b) will be limited from 1 to no more than 30 % by weight, based on the total weight of the hydrogenated copolymer (b). In one embodiment, the content of the repeating unit derived from the alkenyl aromatic compound in the hydrogenated copolymer (b) will be from 1 to 30 % by weight, based on the total weight of the hydrogenated copolymer (b). In another embodiment, the content of the repeating unit derived from the alkenyl aromatic compound in the hydrogenated copolymer will be from 5 to 20 % by weight, based on the total weight of the hydrogenated copolymer (b). In one exemplary embodiment, the content of the repeating unit derived from the alkenyl aromatic compound in the copolymer (b') and thus the hydrogenated copolymer (b) will be from 5 to 15 % by weight, based on the total weight of the hydrogenated copolymer (b).

It is also an aspect of the disclosed thermoplastic polyolefin composition that the content of the alkylene repeating unit derived from the alkylene compound in copolymer (b') be at least 55 % by weight, based on the total weight of copolymer (b'). In one embodiment, the content of the repeating unit derived from the alkylene compound in the hydrogenated copolymer (b) will be from 60 to 95 % by weight, based on the total weight of the copolymer (b'), i.e., hydrogenated copolymer (b) prior to hydrogenation. In another embodiment, the content of the repeating unit derived from the alkylene compound in the hydrogenated copolymer will be from 65 to 90 % by weight, based on the total weight of the copolymer (b'). In one exemplary embodiment, the content of the repeating unit derived from the conjugated diene in the copolymer (b') will be from 70 to 90 % by weight, based on the total weight of copolymer (b').

It will be appreciated that in the most exemplary embodiment, the resulting hydrogenated copolymer (b) will result from the hydrogenation of an ethylene-butene styrene copolymer (b') having an alkylene residue content wherein at least 60% of the alkylene residues comprise four or more carbons, based on the total alkylene content of copolymer (b').

The hydrogenated copolymer (b) preferably has a number average molecular weight of about 5,000 to about 500,000 AMU, as determined by gel permeation chromatography (GPC) using polystyrene standards. Within this range, the number average molecular weight may preferably be at least about 10,000 AMU, more preferably at least about 30,000 AMU, yet more preferably at least about 45,000 AMU. Also within this range, the number average molecular weight may preferably be up to about 300,000 AMU, more preferably up to about 200,000 AMU, yet more preferably up to about 150,000 AMU.

In one embodiment, the hydrogenated copolymer (b) will have a glass transition temperature (Tg) below 0 degrees C. From the standpoint of low-temperature impact strength of the resulting resin composition, in another embodiment, the copolymer (b) will have a Tg of at least -90 degrees C. The glass transition temperature of the hydrogenated copolymer (b) can be measured by the aforesaid DSC method or from the visco-elastic behavior toward temperature change as observed with a mechanical spectrometer.

In one embodiment of the disclosed thermoplastic polyolefin composition, the hydrogenated copolymer (b) is selected so as to be thermodynamically miscible with an adduct of the optional functionalized polyolefin (c) and optional monoamine terminated polyalkylene oxide (d) at adduct:copolymer (b) ratios of from 0.1:9.9 to 9.9:0.1. The term 'thermodynamically miscible' as used herein refers to two components that are mixed on a molecular level so as to be a one phase homogenous composition independent of shear forces.

Illustrative examples of commercially available suitable hydrogenated copolymers (b) include Dynaron®1321P, available from Japan Synthetic Rubber Corp of Japan and Kraton® 6932, available from Kraton Corp.

In one embodiment, the disclosed thermoplastic polyolefin compositions comprise about 5 wt.% to about 60 wt.% of the hydrogenated copolymer (b) based on the total weight of all polymeric components. In another embodiment, the disclosed thermoplastic polyolefin compositions comprise about 20 wt.% to about 60 wt.% of the hydrogenated copolymer (b) based on the total weight of all polymeric components. In one exemplary embodiment, the disclosed thermoplastic polyolefin compositions comprise about 40 wt.% to about 60 wt.% the hydrogenated copolymer (b) based on the total weight of all polymeric components.

As disclosed herein, the thermoplastic polyolefin compositions will also comprise from 1 to 15 weight % of a processing oil (f), based on the total weight of all polymeric components. In one embodiment, the disclosed thermoplastic polyolefin compositions will comprise from 1 to 12 weight % of a processing oil (f), based on the total weight of all polymeric components. In another exemplary embodiment, the disclosed thermoplastic polyolefm compositions will comprise from 2 to 10 weight % of a processing oil (f), based on the total weight of all polymeric components. In one especially exemplary embodiment, the disclosed compositions will comprise from 6 to 10% of a processing oil (f), based on the total weight of all polymeric components.

The use of amounts of processing oil (f) greater than those described above may be disadvantageous with regard to subsequent volatilization and deposition on surrounding surfaces.

Illustrative examples of suitable processing oils (f) are those compatible processing oils that include hydrocarbon based oils comprising mainly paraffinic components. In one embodiment, the processing oil (f) will be a nonaromatic processing oil.

Suitable process oils have an average molecular weight (calculated from the kinematic viscosity per ASTM D2502) in the range of about 100 to about 1000. The average molecular weight of the process oil should be selected to avoid migration from the composition in normal service use conditions. In one embodiment, the average molecular weight of the processing oil (f) will be from 400 to 800.

Commercially available examples of suitable processing oils (f) include Paralux processing oil and Hydrobrite processing oil, respectively commercially available from Chevron and Crompton.

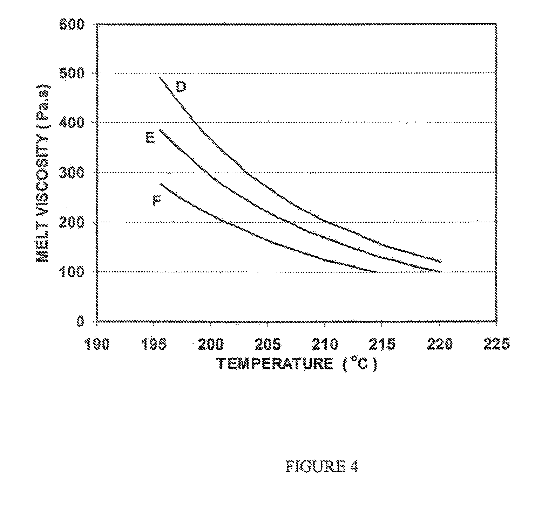

Although not wishing to be bound to a particular theory, it has unexpectedly been found that thermoplastic polyolefin compositions comprising the hydrogenated copolymer (b) and a combination of the polypropylene (a) and the processing oil (f) display a shift to lower temperature of a desirable order/disorder transition (ODT). As used herein, the term 'order/disorder temperature' or 'ODT' shift refers to that temperature at which segregated (I) polystyrene blocks of copolymer (b) become disassociated with regard to the remainder of the copolymer (b), i.e., ethylene-butene mid-blocks, and form a free flowing homogeneous melt (II). This is shown in Figure 4.

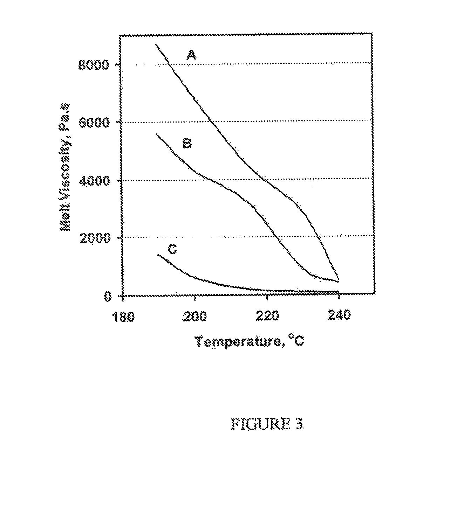

As indicated in Figure 3, the effect of the ODT shift is that at a given initial temperature, the initial melt viscosity is significantly decreased. The information given in Figure 3 is for those compositions shown in Table 2 below. The copolymer (b), i.e. composition A, displays an ODT effect at high temperature such that the melt viscosity is high until approximately 240 degrees C. The addition of polypropylene (a) to (a) as shown for composition B has a beneficial but insufficient effect on reducing the melt viscosity. As shown in Figure 3, for composition C, which contains processing oil (f), the ODT shift has been moved to a temperature below 190 degrees C and increasing the temperature does not result in a significantly further reduced viscosity. For example, melt viscosity does not change appreciably at temperatures of from 220 to 240 degrees C. Compositions D-F, as shown in Figure 4 illustrate the effect on ODT as a result of increasing the amount of processing oil (f) from 6PHR to 10PHR for compositions shown in Table 2.

Accordingly, it is an aspect of the disclosed thermoplastic polyolefm compositions that the combination of copolymer (b) and processing oil (f) in the compositions results in ODT shifts, i.e., the ODT occurs at lower temperatures. As a result, lower melt viscosities are obtained without increasing the temperatures to which the compositions are exposed and accordingly may cause degradation of the composition. Additionally, those of skill in the art will appreciate the attendant cost and energy savings.

In one embodiment, the disclosed thermoplastic polyolefin compositions may further comprise an optional functionalized polyolefin (c), and an optional polyetheramine (d). Those of skill in the art will appreciate that, if present, the functionalized polyolefin (c) and polyetheramine (d) form an adduct as discussed above.

Optional functionalized polyolefin (c) is a polyolefin onto which a monomer has been grafted.

Any optional functionalized polyolefin can be employed in the disclosed thermoplastic polyolefin compositions which may react with the optional polyetheramine and which is generally compatible with a given polyolefin after reaction with the optional polyetheramine.

The usual method of grafting a monomer onto a polyolefin is by free radical reaction. In the practice of this invention, the functionalized polyolefin is not a copolymer of, for example, maleic anhydride and propylene, where the maleic anhydride moiety is predominantly in the backbone of the copolymer.

Representative examples of suitable polyolefins to which a monomer may be grafted include homopolymers and copolymers of various olefins such as ethylene, propylene, butylene, pentene, hexylene, heptene, and octene.

Suitable monomers for preparing functionalized polyolefin (c) are, for example, olefinically unsaturated monocarboxylic acids of less than 12 carbon atoms, e.g., acrylic acid or methacrylic acid, and the corresponding tert-butyl esters, e.g., tert-butyl(meth)acrylate, olefinically unsaturated dicarboxylic acids of less than 12 carbon atoms, e.g., fumaric acid, maleic acid, and itaconic acid and the corresponding mono-and/or di-tert-butyl esters, e.g., mono- or di-tert-butyl fumarate and mono- or di-tert-butyl maleate, olefinically unsaturated dicarboxylic anhydrides of less than 12 carbon atoms, e.g., maleic anhydride, sulfo- or sulfonyl-containing olefinically unsaturated monomers of less than 12 carbon atoms, e.g., p-styrenesulfonic acid, 2-(meth)acrylamide-2-methylpropenesulfonic acid or 2-sulfonyl(meth)acrylate, oxazolinyl-containing olefinically unsaturated monomers of less than 12 carbon atoms, e.g., vinyloxazolines and vinyloxazoline derivatives, and epoxy-containing olefinically unsaturated monomers of less than 12 carbon atoms, e.g., glycidyl (meth)acrylate or allyl glycidyl ether.

In one exemplary embodiment, the monomer used for preparing the optional functionalized polyolefin (c) will be maleic anhydride while the polyolefin will be polypropylene. Hence, in one exemplary embodiment, the optional functionalized polyolefin (c) will be maleated polypropylene.

Maleated polypropylene is commercially available, being manufactured by a number of producers. For example, a suitable maleated polypropylene is available from Eastman Chemical under the name EPOLENE E-43.

The optional functionalized polyolefin (c) suitable for use herein may have a wide variety of number average molecular weights. In the practice of the disclosed thermoplastic composition, any functionalized polyolefin (c) can be used which reacts with polyetheramines (d) to provide an adduct.

In one embodiment, the optional functionalized polyolefin (c) may have a number average molecular weight greater than about 3,000 and preferably less than about 50,000. It should be appreciated that the polyolefin can be bonded to one or two monomers when the polyolefin is linear, while more than two monomers might be included when the polyolefin is branched. Typically, one or two monomers are present.

The optional polyetheramines (d) used herein include monoamines, diamines and triamines, having a molecular weight of from about 150 to about 12,000, such chemicals including but not limited to hydroxyl, amine, and aminoalcohol functionalized polyether materials.

In one embodiment, the optional polyetheramines (d) will have a molecular weight of from about 200 to about 4,000. In another embodiment, the optional polyetheramine (d) will have a molecular weight in the range from about 400 to about 2000.

In another embodiment, the optional polyetheramine (d) will contain ethylene oxide units and propylene oxide units in a molar ratio of about 10:1 1 to about 3:1. In one embodiment, such polyether monoamines have a molecular weight in the range from about 2000 to about 2200. In a more exemplary embodiment, the optional polyetheramine (d) will contain ethylene oxide units and propylene oxide units in a molar ratio of about 7:1.

As disclosed herein, the use of monoamines and diamines are especially desirable. In one exemplary embodiment, the optional polyetheramine (d) will be a monoamine terminated polyoxyalkylene.

Suitable polyether blocks of the polyetheramine include polyethylene glycol, polypropylene glycol, copolymers of polyethylene glycol and polypropylene glycol, poly(1,2-butylene glycol), and poly(tetramethylene glycol). The glycols can be aminated using well known methods to produce the polyetheramines. Generally, the glycols are prepared from ethylene oxide, propylene oxide or combination thereof using well-known methods such as by a methoxy or hydroxy initiated reaction. When both ethylene oxide and propylene oxide are used, the oxides can be reacted simultaneously when a random polyether is desired, or reacted sequentially when a block polyether is desired.

In one embodiment, the optional polyetheramines (d) are prepared form ethylene oxide, propylene oxide or combinations thereof. Generally, when the optional polyetheramine (d) is prepared from ethylene oxide, propylene oxide or combinations thereof, the amount of ethylene oxide on a molar basis is greater than about 50 percent of the polyetheramine, preferably greater than about 75 percent and more preferably greater than about 90 percent. In one embodiment of this invention, polyols and amines including polyalkylene polyamines and alkanol amines or any amine that is not a polyetheramine as disclosed herein may be absent from the composition. Similarly, functional groups other than ether linkages and amine groups may be absent from the optional polyetheramine (d).

The optional polyetheramines (d) can be prepared using well known amination techniques such as described in U.S. Pat. No. 3,654,370; U.S. Pat. No. 4,152,353; U.S. Pat. No. 4,618,717; U.S. Pat. No. 4,766,245; U.S. Pat. No. 4,960,942; U.S. Pat. No. 4,973,761; U.S. 5,003,107; U.S. Pat. No. 5,352,835; U.S. Pat. No. 5,422,042; and U.S. Pat. No. 5,457,147. Generally, the polyetheramines (d) are made by aminating a polyol, such as a polyether polyol with ammonia in the presence of a catalyst such as a nickel containing catalyst such as a Ni/Cu/Cr catalyst.

Suitable monoamines include JEFFAME.TM. M-1000, JEFFAMINE.TM. M-2070, and JEFFAMINE.TM. M-2005. Suitable diamines include JEFFAMINE.TM. ED-6000, JEFFAMINE.TM. ED-4000, JEFFAMINE.TM. ED-2001 including XTJ-502 and XTJ-418, JEFFAMINE.TM. D-2000, JEFFAMINE.TM. D-4000, JEFFAMINE.TM. ED-900, JEFFAMINE.TM. ED-600, and JEFFAMINE.TM. D-400. Suitable triamines include JEFFAMINE.TM. ET-3000, JEFFAMINE.TM. T-3000 and JEFFAMINE.TM. T-5000.

In one exemplary embodiment, the optional polyetheramine (d) will be at least one of JEFFAMINE XTJ-418.

The optional functionalized polyolefin (c) and the optional polyetheramine (d) may be added to the thermoplastic polyolefin composition either during or after the preparation of the thermoplastic polyolefin composition. Moreover, the optional functionalized polyolefin (c) and the optional polyetheramine (d) may be added to the thermoplastic polyolefin composition either separately or as a previously mixed combination. Thus the mixing of the functionalized polyolefm (c) and polyetheramine (d) to form the adduct may occur before or during the preparation of the disclosed thermoplastic polyolefin composition. It will therefore be appreciated that the reaction of the functionalized polyolefin (c) and the polyetheramine (d) to form the adduct may be carried out in a customary mixing apparatus including batch mixers, continuous mixers, kneaders, and extruders. For most applications, the mixing apparatus will be an extruder.

Although the use of the functionalized polyolefin (c) and the polyetheramine (d) are optional as described herein, in one exemplary embodiment, the disclosed thermoplastic polyolefin compositions will comprise at least one functionalized polyolefin (c) and at least one polyetheramine (d). As disclosed above, when present, the polyolefin (c) and the polyetheramine (d) will react to form an adduct.

The thermoplastic polyolefm compositions may also comprise from 0 to up to about 30 wt. % of an optional polymer component (e).

In one embodiment, the optional polymer component (e) may be an ethylene copolymer elastomer, such as ethylene-based rubber. Suitable ethylene copolymer elastomers include, but are not limited to, ethylene-propylene, ethylene-butene, ethylene-octene, ethylene-pentene, ethylene-hexene copolymers and the like, as well as combinations comprising at least one of the forgoing ethylene copolymer elastomers, having glass transition temperatures of about down to -70°C or less. In one embodiment, the optional polymer component (e) may be present as an ethylene copolymer elastomer in an amount of from 0 to 30% by weight of all polymeric components, while in another embodiment, the optional polymer component (e) may be present as an ethylene copolymer elastomer in an amount of from 15 to 25% by weight of all polymeric components.

Other suitable ethylene copolymer elastomers include ethylene-propylene non-conjugated diene copolymer (EPDM). The non-conjugated dienes contain about 6 to about 22 carbon atoms and have at least one readily polymerized double bond. The ethylene-propylene copolymer elastomer contains about 60 wt.% to about 80 wt.%, usually about 65 wt.% to about 75 wt.% ethylene, based on the total weight of the EPDM. The amount of non-conjugated diene is generally about 1 wt.% to about 7 wt.%, usually about 2 wt.% to about 5 wt.%, based on the total weight of the EPDM. In one embodiment, the ethylene-propylene copolymer elastomer is EPDM coploymer. Suitable EPDM copolymers include, but are not limited to, ethylene-propylene-1,4 hexadiene, ethylene-propylene dicyclopentadiene, ethylene-propylene norbornene, ethylene-propylene-methylene-2-norbornene, and ethylene-propylene-1,4-hexadiene/norbornadiene copolymer.

In another embodiment, the thermoplastic polyolefin compositions may further comprise about 0 wt.% to about 60 wt.% of a styrenic block copolymer as an optional polymer component (e). It will be appreciated that this optional styrenic is different from hydrogenated copolymer (b) and is not subject to its particular requirements.

The thermoplastic polyolefin compositions may further optionally comprise up to about 5 wt.% polymer additive(s). Suitable polymer additives include polymer surface modifier to improve scratch resistance, such as fatty acid amides like oleamide and erucamide, and siloxane. The thermoplastic polyolefin compositions may be comprised of up to about 5 wt. %, preferably about 0.3% to about 1 wt.%, of polymer surface modifier.

In an additional embodiment, the thermoplastic polyolefin compositions further comprise from 0 to up to 10 wt.%, preferably about 3 wt.% to about 7 wt.%, of a powder flow additive, such as inorganic particulate. Suitable powder flow additive includes hydrated silicate such as talc and montmorillonite clay. The particle size range of the silicate should be in the range of about 1 to about 40µm and preferably in the range of about 1 to about 20µm.

The disclosed thermoplastic polyolefin compositions can also optionally comprise stabilizer, such as heat stabilizer, light stabilizer and the like, as well as combinations comprising at least one of the foregoing stabilizers. Heat stabilizers include phenolics, hydroxyl amines, phosphates, ands the like, as well as combinations comprising at least one of the foregoing heat stabilizers. Light stabilizers include low molecular weight (having number-average molecular weights less than about 1,000 AMU) hindered amines, high molecular weight (having number-average molecular weights greater than about 1,000 AMU) hindered amines, and the like, as well as combinations comprising at least one of the foregoing light stabilizers.

Optionally, various additives known in the art may be used as needed to impart various properties to the composition, such as heat stability, stability upon exposure to ultraviolet wavelength radiation, long-term durability, and processability. The exact amount of stabilizer is readily empirically determined by the reaction employed and the desired characteristics of the finished article, having about 1 wt.% to about 4 wt.%, preferably about 1 wt% to about 3 wt.%, stabilizer.

In one embodiment, the disclosed thermoplastic polyolefin compositions for use in slush molding may be characterized by melt viscosities in the range of 50 Pa.s to 1000 Pa.s over the processing temperature range of 180°C to 260°C as measured at low shear rate such as that applied by parallel plate rheometer. In another embodiment, the disclosed thermoplastic polyolefin compositions for use in slush molding may be characterized by melt viscosities in the range of 100 Pa.s to 600 Pa.s over the processing temperature range of 180°C to 260°C as measured at low shear rate such as that applied by parallel plate rheometer. High Melt Flow Index (as measured according to ASTM D1238) materials with Melt Flow Index (MFI) greater than about 20 grams/10 minutes (g/10 min) measured at 230°C employing a 2.16 kilogram (kg) weight (>20 g/10 min) are selected to obtain low melt viscosity of the composition.

In addition, the disclosed thermoplastic polyolefin compositions may also be characterized by single composition dependent glass transition temperature Tg, since the components (a) and (b) are a homogenous one-phase mixture. That is, the disclosed thermoplastic polyolefin compositions will not show phase distinct Tg points. In one embodiment, the disclosed compositions will have a Tg of from -20 to -50 °C.

Table 1 provides a list of components suitable for use in the thermoplastic compositions and examples discussed herein. It will be understood that the components listed in Table 1 are given for the purpose of illustration and do not limit the invention.

**TABLE 1**

| Component | Source | Trade Name |
|---|---|---|
| Polypropylene (a) | Basell, Equistar, Exxon, Huntsman, Dow, Mobile Exxon | Profax®, Valtec®, Petrothene®, Escorene® |
| Ethylene Copolymer Rubber | DSM, DuPont Dow, Exxon | Keltan®, Engage®, Exact® |
| Copolymer (b) | JSR, Kraton® | Dynaron®, Kraton® |
| Stabilizers | BASF, Ciba, Cytec | Irganox®, Tinuvin®, Cyanox®, Cyasorb® |
| Powder Flow Additives | Southern Clay Products, Nanocor | Cloisite®, Nanomer® |
| Polymer surface modifiers | Ciba, Croda, Dow Coming | Atmer®, Crodamide®, Irgosurf®, UHMW Siloxane® |

The thermoplastic polyolefin compositions further optionally comprise a color pigment or a combination of color pigments. Suitable color pigments are known to those skilled in the art and the exact amount of color pigment is readily empirically determined based on the desired color characteristic of the formulation and the finished product, with about 1 wt.% to about 2 wt.% possible.

The thermoplastic polyolefin composition may be prepared by melt blending the ingredients under high shear conditions, for example, using an internal mixer, such as Banbury type mixer, or by using a twin-screw extruder with screw elements selected to provide high shear for good distributive mixing of components. The resulting compositions may be processed further into smaller particles, such as pellets, micropellets, or powder, or any suitable form. The smaller particles of the compositions are particularly useful for slush molding to achieve uniform skin formation.

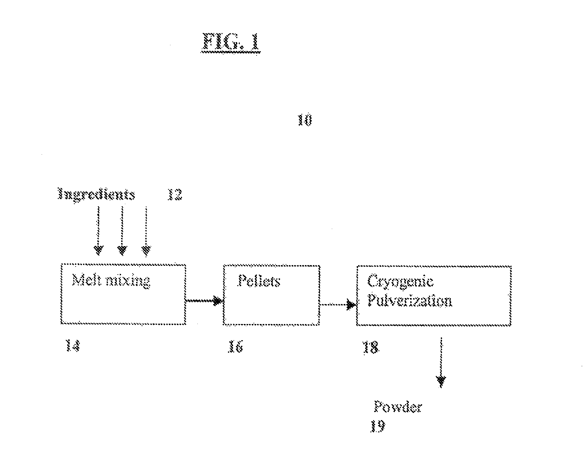

In one embodiment, as shown in Figure 1, the process depicted as reference numeral 10, comprises forming the thermoplastic polyolefin ingredients 12, into pellets 16 by melt mixing 14 the ingredients 12. Melt mixing 14 may be accomplished by using an extruder, such as a twin screw extruder or an internal mixer, such as a Banbury type mixer. The pellets 16 may then undergo cryogenic pulverization 18 (pulverized at cryogenic temperature) to produce a powder 19, with an average particle size of about 70 to about 500 µm in one embodiment, and an average particle size of about 75 to about 150 µm in one exemplary embodiment. Cryogenic pulverization 18 is a shearing/impact process which makes non-uniform particles. In an alternative embodiment, not shown herein, the process includes melt mixing the components using an extruder, such as a twin screw extruder, and further processing the resulting pellets 16 with an extruder, such as a single screw extruder, to produce micropellets 29.

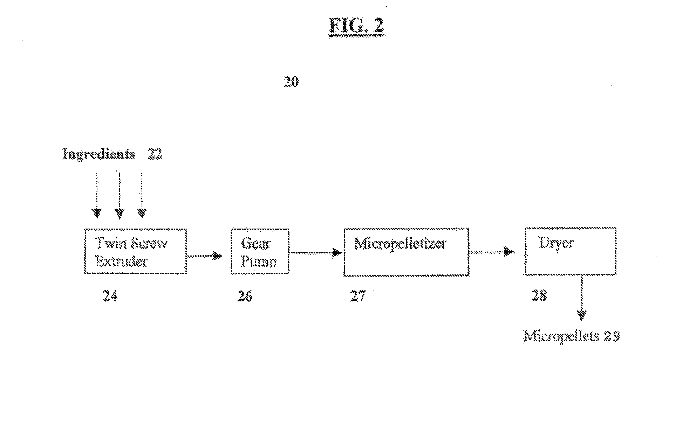

In another embodiment, as shown in Figure 2, the process, as depicted as reference numeral 20, comprises forming micropellets 29, of the composition using a gear pump 26 as a means to achieve high backpressure from the twin-extruder 24 to the minibead die plate, which would eliminate a separate processing step. In this process 20, the ingredients 22 are melt compounded by in-line extrusion, using an extruder, such as a twin screw extruder 24 with a gear pump 26 to increase the melt pressure. The resulting composition is then formed into micropellets 29 of the composition, in a micropellitizer 27. Micropellets 29 of the composition may be processed in a dryer 28, such as a centrifugal dryer.

Micropellets 29 of the composition may be larger spherical particles than cryoground powder 19 particles, usually measuring in the range of about 350 to about 900 µm. Slush molding can be achieved using either the cryoground powder 19, the micropellets 29 of the composition or combinations of the two for forming articles of manufacture therefrom.

The process of slush molding may be successful when the powder 19 and/or micropellets 29 possess good mechanical flow within the forming tool during the rotation cycle. This property of mechanical flow can be quantified by measuring the time to empty a cup with an orifice at the bottom and with specific volume. The improved flow can be achieved by the addition of suitable powder flow additive such as inorganic particulate. Suitable powder flow additive includes hydrated silicate such as talc and montmorillonite clay. The powder flow additive may comprise up to about 10 wt. %, preferably about 3 wt.% to about 7 wt.%, of the total weight of the thermoplastic polyolefin composition. The particle size range of the silicate should be in the range of about 1 to about 40µm and preferably in the range of about 1 to about 20µm. These powder flow additive may be added during the melt compounding or as a secondary process during cryogrinding or mechanical mixing of the powder 19 and/or micropellets 29 with the powder flow additive.

The embodiments of the present compositions, process and articles made therefrom, although primarily described in relation to vehicle application such as interior sheathing, including instrument panel skins, door panels, air bag covers roof liners and seat covers, can be utilized in numerous automotive and non-automotive applications.

### Examples

The following examples illustrate the present invention. It is understood that these examples are given for the purpose of illustration and do not limit the invention. In the examples, all parts and percentages are by weight based on the total weight of the composition unless otherwise specified.

### Example 1

The following TPO composition were prepared by melt mixing as per Table 2 below. After processing into a powder the sample gave the test results as per Figures 3 and 4.

Melt viscosity was measured by a parallel plate rheometer with an applied strain of 1 radiant per second in a temperature range of 180 to 260°C.

**Table 2**

| **Materials/Description** | **A** | **B** | **C** | **D** | **E** | **F** |
|---|---|---|---|---|---|---|
| Hydrogenated copolymer | | 80% | 60.0% | 70.0% | 70.0% | 70.0% |
| Polypropylene | 100% | 20% | 40.0% | 30.0% | 30.0% | 30.0% |
| Process Oil | -- | -- | 10.0 | 6.0 PHR | 8.0 PHR | 10.0 |
| | | | PHR | | | PHR |
| Color Concentrate and Additives | -- | -- | -- | 8.0 PHR | 8.0 PHR | 8.0 PHR |

As indicated in Figure 3, the effect of the ODT shift is that at a given initial temperature, the initial melt viscosity is significantly decreased. The information given in Figure 3 is for those compositions shown in Table 2 below. The copolymer (b), i.e. composition A, displays an ODT effect at high temperature such that the melt viscosity is high until approximately 240 degrees C. The addition of polypropylene (a) to (a) as shown for composition B has a beneficial but insufficient effect on reducing the melt viscosity. As shown in Figure 3, for composition C, which contains processing oil (f), the ODT shift has been moved to a temperature below 190 degrees C and increasing the temperature does not result in a significantly further reduced viscosity. For example, melt viscosity does not change appreciably at temperatures of from 220 to 240 degrees C. Compositions D-F, as shown in Figure 4 illustrate the effect on ODT as a result of increasing the amount of processing oil (f) from 6PHR to 10PHR for compositions shown in Table 2.

Unless otherwise indicated, all numbers expressing quantities of ingredients, properties such as molecular weight, reaction conditions, and so forth used in the specification and claims are to be understood as being modified in all instances by the term "about". Accordingly, unless indicated to the contrary, the numerical parameters set forth in herein are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the above specific examples are reported as precisely as possible. Any numerical value, however, inherently contain certain errors necessarily resulting from the standard deviation found in their respective testing measurements.

This application is a divisional application of European patent application no. 08 772 065.2 (the "parent application"), also published under no. EP 2 167 580. The content of the original claims of the parent application is repeated below in the present description and form part of the content of this description as follows:

### ITEMS

1. A thermoplastic polyolefin composition having reduced melt viscosity, the composition comprising
   (a) polypropylene,
   (b) a hydrogenated copolymer (b) of a vinyl aromatic compound and an alkylene compound, comprising
   from 1 to no more than 30% by weight of vinyl aromatic residues, based on the weight of the hydrogenated copolymer (b), and
   at least 55 % by weight of alkylene residues that are C₄ or higher, based on total alkylene content prior to the hydrogenation of copolymer (b), and
   a processing oil.
2. The composition of item 1 wherein the resulting composition of (a), (b) and (f) has a lower order/disorder transition temperature as compared to a composition consisting of (a) and (b) in the absence of (f).
3. The composition of item 1 further comprising
   (c) a functionalized polyolefin, and
   (d) a monoamine terminated polyalkylene oxide.
4. The composition of item 3 wherein the functionalized polyolefin (c) and monoamine terminated polyalkylene oxide (d) form an adduct that is thermodynamically miscible with the copolymer (b) at adduct:copolymer ratios of from 0.1:9.9 to 9.9:0.1.
5. The composition of item 1 wherein the hydrogenated copolymer (b) comprises (i) from 5 to 20% by weight of vinyl aromatic residues, based on the weight of the hydrogenated copolymer (b).
6. The composition of item 5 wherein the hydrogenated copolymer (b) comprises (i) from 5 to 15% by weight of vinyl aromatic residues, based on the weight of the hydrogenated copolymer (b).
7. The composition of item 1 wherein the hydrogenated copolymer (b) comprises (ii) at least 60 % by weight of alkylene residues that are C₄ or higher, based on total alkylene content prior to the hydrogenation of copolymer (b).
8. The composition of item 7 wherein the hydrogenated copolymer (b) comprises (ii) from 60 to 95% by weight of alkylene residues that are C₄ or higher, based on total alkylene content prior to the hydrogenation of copolymer (b).
9. The composition of item 8 wherein the hydrogenated copolymer (b) comprises (ii) from 60 to 90% by weight of alkylene residues that are C₄ or higher, based on total alkylene content prior to the hydrogenation of copolymer (b).
10. The composition of item 9 wherein the hydrogenated copolymer (b) comprises (ii) from 70 to 90% by weight of alkylene residues that are C₄ or higher, based on total alkylene content prior to the hydrogenation of copolymer (b).
11. The composition of item 1 wherein the hydrogenated copolymer (b) is characterized by a glass transition temperature (Tg) that is below 0 degrees C and greater than -90 degrees C.
12. The composition of item 1 wherein the hydrogenated copolymer (b) is characterized by a glass transition temperature (Tg) that between -20 and -60 degrees C.
13. A method of making a thermoplastic olefin composition having a lowered ODT shift, the method comprising combining
   (a) polypropylene,
   (b) a hydrogenated copolymer (b) of a vinyl aromatic compound and an alkylene compound, comprising
      (i) from 1 to no more than 30% by weight of vinyl aromatic residues, based on the weight of the copolymer (b), and
      (ii) at least 60 % by weight of alkylene residues that are C₄ or higher, based on the weight of the copolymer (b), and
   (c) a processing oil.
14. A method of making a molded composite, comprising
   applying the composition of claim 1 to a mold to make a molded skin,
   and
   applying a polymer based composition to at least one surface of the skin,
   wherein the polymer based composition adheres to the molded skin without the use of adhesion enhancing techniques selected from the group consisting of adhesion primers, plasma surface treatments, flame surface treatments, or corona discharge surface treatments.
15. The method of item 14 wherein the polymer based composition is at least one of a foam or a coating.
16. The method of item 15 wherein the foam is a polyurethane foam.
17. The molded article made by the method of item 14.

## Claims

1. A thermoplastic polyolefin composition having reduced melt viscosity, the composition comprising
(a) polypropylene,
(b) a hydrogenated copolymer (b) of a vinyl aromatic compound and an alkylene compound, comprising
from 1 to no more than 30% by weight of vinyl aromatic residues, based on the weight of the hydrogenated copolymer (b), and
at least 55 % by weight of alkylene residues that are C₄ or higher, based on total alkylene content prior to the hydrogenation of copolymer (b),
a polymer component selected from the group consisting of ethylene copolymer elastomers and styrenic block copolymers; and
a processing oil.

2. The composition of claim 1 further comprising
(c) a functionalized polyolefin, and
(d) a monoamine terminated polyalkylene oxide.

3. The composition of claim 2 wherein the functionalized polyolefin (c) and monoamine terminated polyalkylene oxide (d) form an adduct that is thermodynamically miscible with the copolymer (b) at adduct:copolymer ratios of from 0.1:9.9 to 9.9:0.1.

4. The composition of claim 1 wherein the hydrogenated copolymer (b) is present in an amount of 5 to 60 weight percent, based on the total weight of the composition.

5. The composition of claim 1 wherein the polypropylene is present in an amount of 20 to 50 weight percent based on the total weight of the composition.

6. The composition of claim 1 wherein the processing oil is present in an amount of 1 to 10 weight percent, based on the total weight of the composition.

7. The composition of claim 1 wherein the hydrogenated copolymer (b) comprises (ii) from 60 to 95% by weight of alkylene residues that are C₄ or higher, based on total alkylene content prior to the hydrogenation of copolymer (b).

8. The composition of claim 1 wherein the hydrogenated copolymer (b) is **characterized by** a glass transition temperature (Tg) that is below 0 degrees C and greater than -90 degrees C.

9. The composition of claim 1 wherein the hydrogenated copolymer (b) is **characterized by** a glass transition temperature (Tg) that between -20 and -60 degrees C.

10. A method of making a thermoplastic olefin composition having a lowered ODT shift, the method comprising combining
(a) polypropylene,
(b) a hydrogenated copolymer (b) of a vinyl aromatic compound and an alkylene compound, comprising
(i) from 1 to no more than 30% by weight of vinyl aromatic residues, based on the weight of the copolymer (b), and
(ii) at least 60 % by weight of alkylene residues that are C₄ or higher, based on the weight of the copolymer (b),
a polymer component selected from the group consisting of ethylene copolymer elastomers and styrenic block copolymers; and
(c) a processing oil.

11. A method of making a molded composite, comprising
applying the composition of claim 1 to a mold to make a molded skin, and
applying a polymer based composition to at least one surface of the skin,
wherein the polymer based composition adheres to the molded skin without the use of adhesion enhancing techniques selected from the group consisting of adhesion primers, plasma surface treatments, flame surface treatments, or corona discharge surface treatments.

12. The method of claim 11 wherein the polymer based composition is at least one of a foam or a coating.

13. The method of claim 12 wherein the foam is a polyurethane foam.

14. The molded article made by the method of claim 13.
